# EUROPEAN PATENT APPLICATION

(11) **EP 4 787 875 A1**
(43) Date of publication of application: **05.08.2026**
(21) Application number: 24870847.1
(22) Date of filing: 26.09.2024
(51) Int. Cl.: H04N 21/81

(54) **STREAMING MEDIA GENERATION METHOD AND APPARATUS, AND TERMINAL DEVICE**

(30) Priority: 27.09.2023 CN 202311261968
(71) Applicant: Beijing Zitiao Network Technology Co., Ltd., Beijing 100190 (CN)
(72) Inventor: ZHAO, Dajun, Beijing 100028 (CN); CUI, Bohan, Beijing 100028 (CN); LIU, Chenyang, Beijing 100028 (CN); ZHANG, Jianfeng, Beijing 100028 (CN); SU, Yifan, Beijing 100028 (CN)
(74) Representative: Marks & Clerk LLP
(86) International application number: PCT/CN2024/121322
(87) International publication number: WO 2025/067304

(57) **Abstract**

The present disclosure provides a streaming media generation method and apparatus, and a terminal device. The method comprises: acquiring an image or a video; determining a target music element; and generating streaming media in response to an operation of a user, wherein the streaming media comprises the video or the image and target music, the target music comprises the target music element, and the target music is associated with content of the video or the image.

## Description

The present disclosure claims priority to Chinese Patent Application No. 202311261968.5, filed on September 27, 2023, which is incorporated herein by reference in its entirety as a part of the present disclosure.

### TECHNICAL FIELD

Embodiments of the present disclosure relate to a streaming media generation method and a device, and a terminal apparatus.

### BACKGROUND

In the field of streaming media creation, a user may pre-create a piece of music, or may create a piece of music, and then generate a video based on the piece of music.

Currently, when creating lyrics of the music, the user may input a main portion (for example, a structure and content) of pre-created lyrics into a terminal apparatus. The terminal apparatus may supplement the main portion of the lyrics created by the user, to obtain a piece of complete lyrics. However, in the method described above, the user needs to complete complex lyrics creation, resulting in high complexity of streaming media creation.

### SUMMARY

The present disclosure provides a streaming media generation method and a device, and a terminal apparatus, to solve one or more technical problems.

According to a first aspect, the present disclosure provides a streaming media generation method. The method includes:
obtaining an image or a video;
determining a target music element; and
generating streaming media in response to an operation of a user, wherein the streaming media includes the video or the image and a target music, the target music includes the target music element, and the target music is associated with content of the video or the image.

According to a second aspect, the present disclosure provides a streaming media generation device. The streaming media generation device includes:
an obtaining module, a determining module, and a generation module.

The obtaining module is configured to obtain an image or a video.

The determining module is configured to determine a target music element.

The generation module is configured to generate streaming media in response to an operation of a user, and the streaming media includes the video or the image and target music, the target music includes the target music element, and the target music is associated with content of the video or the image.

According to a third aspect, an embodiment of the present disclosure provides a terminal apparatus, including: a processor and a memory.

The memory stores computer-executable instructions.

The processor executes the computer-executable instructions stored in the memory, to cause the at least one processor to perform the streaming media generation method according to the first aspect above and various possible designs of the first aspect.

According to a fourth aspect, an embodiment of the present disclosure provides a computer-readable storage medium storing computer-executable instructions that, when executed by a processor, cause the streaming media generation method according to the first aspect above and various possible designs of the first aspect to be implemented.

### BRIEF DESCRIPTION OF DRAWINGS

In order to describe the technical solutions in the embodiments of the present disclosure more clearly, the accompanying drawings for describing the embodiments are briefly described below. Apparently, the accompanying drawings in the following description are some embodiments of the present disclosure, and those of ordinary skill in the art may still derive other accompanying drawings from these accompanying drawings without creative efforts.
Fig. 1 is a schematic diagram of an application scenario according to an embodiment of the present disclosure;
Fig. 2 is a schematic flowchart of a streaming media generation method according to an embodiment of the present disclosure;
Fig. 3 is a schematic diagram of obtaining an image according to an embodiment of the present disclosure;
Fig. 4 is another schematic diagram of obtaining an image according to an embodiment of the present disclosure;
Fig. 5 is a schematic diagram of a streaming media generation method according to an embodiment of the present disclosure;
Fig. 6 is a schematic diagram of a process of obtaining a plurality of sets of first lyrics according to an embodiment of the present disclosure;
Fig. 7 is a schematic diagram of determining a matching value of first lyrics according to an embodiment of the present disclosure;
Fig. 8 is a schematic diagram of a process of determining target lyrics according to an embodiment of the present disclosure;
Fig. 9 is a schematic diagram of a process of a streaming media generation method according to an embodiment of the present disclosure;
Fig. 10 is a schematic structural diagram of a streaming media generation device according to an embodiment of the present disclosure; and
Fig. 11 is a schematic structural diagram of a terminal apparatus according to an embodiment of the present disclosure.

### DETAILED DESCRIPTION

Exemplary embodiments are described in detail herein, and examples thereof are illustrated in the accompanying drawings. When the following description relates to the accompanying drawings, the same numerals in different accompanying drawings denote the same or similar elements, unless otherwise indicated. The implementations described in the following exemplary embodiments do not represent all the implementations consistent with the present disclosure. Rather, they are merely examples of apparatuses and methods that are consistent with some aspects of the present disclosure and that are described in detail in the appended claims.

For ease of understanding, concepts involved in the embodiments of the present disclosure are described below.

Terminal apparatus: is an apparatus with wireless sending and receiving functions. The terminal apparatus may be deployed on land, including indoor or outdoor, handheld, wearable, or vehicle-mounted. The terminal apparatus may be a mobile phone, a tablet computer (Pad), a computer having wireless sending and receiving functions, a virtual reality (VR) terminal apparatus, an augmented reality (AR) terminal apparatus, a wireless terminal in industrial control, a vehicle-mounted terminal apparatus, a wireless terminal in self driving, a wireless terminal apparatus in remote medical, a wireless terminal apparatus in a smart grid, a wireless terminal apparatus in transportation safety, a wireless terminal apparatus in a smart city, a wireless terminal apparatus in a smart home, a wearable terminal apparatus, etc. The terminal apparatus in the embodiments of the present disclosure may also be referred to as a terminal, user equipment (UE), an access terminal apparatus, a vehicle-mounted terminal, an industrial control terminal, a UE unit, a UE station, a mobile station, a mobile console, a remote station, a remote terminal apparatus, a mobile device, a UE terminal apparatus, a wireless communication device, a UE agent, a UE apparatus, etc. The terminal apparatus may be stationary or mobile.

In the related art, streaming media is difficult to create. For example, during music creation, it is difficult for a user to write lyrics and compose. Currently, in order to reduce difficulty in lyrics creation, a user may pre-create main content of a piece of lyrics (for example, the user may pre-write a main structure of the lyrics, main sentences in the lyrics, etc.). A terminal apparatus may supplement the main content of the lyrics written by the user to obtain a piece of complete lyrics, and then generate an audio or a video based on the lyrics. However, in the method described above, the user needs to conceive the structure and the main content of the lyrics, and complexity of lyrics creation is still high, resulting in high complexity of streaming media creation.

In order to solve the technical problem described above, the present disclosure provides a streaming media generation method. A terminal apparatus may display a shooting page, and obtain an image in response to a touch operation on a shooting control in the shooting page. The terminal apparatus may determine a target music element, generate target lyrics based on the image and the target music element in response to an operation of a user, perform text-to-speech processing on the target lyrics to obtain a target speech, and add background music to the target speech to obtain target music. The terminal apparatus may composite the target music and the image to obtain a composited video. The video includes the image and the target music. In this way, the terminal apparatus may generate, based on an image shot by the user, a video related to the image, and the video further includes music related to content of the image, so that diversity of interaction is improved, and user experience is improved. In addition, lyrics of the music in the video are created based on the content of the image, so that the accuracy of the lyrics is relatively high, and the user does not need to write the lyrics and compose, reducing complexity of music creation and then reducing complexity of video creation.

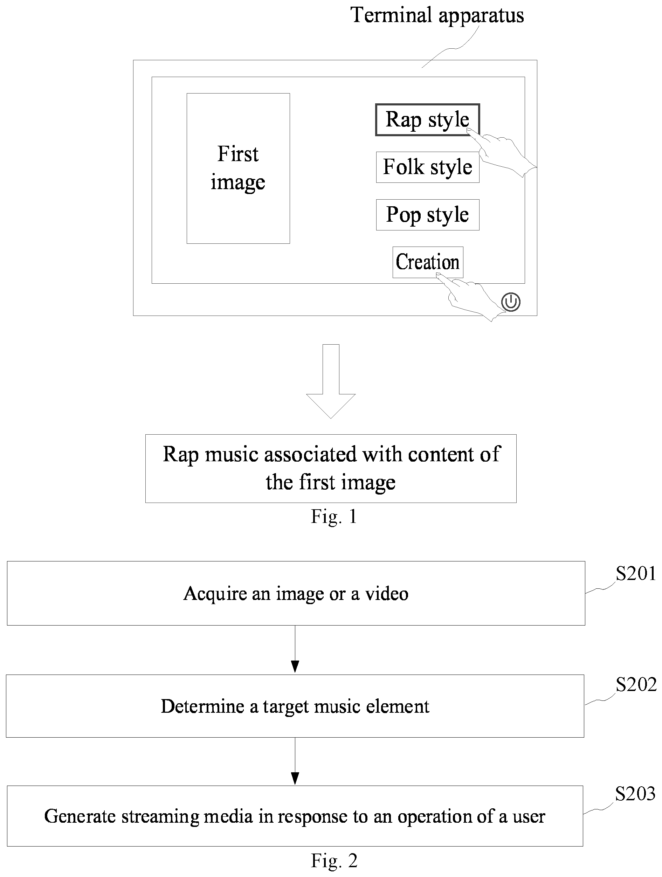

An application scenario of an embodiment of the present disclosure is described below with reference to Fig. 1.

Fig. 1 is a schematic diagram of an application scenario according to an embodiment of the present disclosure. Referring to Fig. 1, which includes a terminal apparatus. A display page of the terminal apparatus is a music creation page, and the music creation page may include a rap style control, a folk style control, a pop style control, and a creation control. After the terminal apparatus obtains an image, a user may tap the rap style control (the rap style control is highlighted) and then tap the creation control. The terminal apparatus may obtain keywords describing content of the image and create a set of lyrics based on the keywords. The terminal apparatus may match background music with the set of lyrics, so that rap music associated with the content of the image can be obtained. In this way, the terminal apparatus can generate, based on an image, rap music associated with content of the image, reducing complexity of music creation, and improving user experience.

It should be noted that Fig. 1 shows merely an exemplary application scenario according to an embodiment of the present disclosure. The application scenario in the embodiments of the present disclosure may further include video creation, etc. This is not limited in the embodiments of the present disclosure.

The present disclosure provides a streaming media generation method and a device, and a terminal apparatus. The terminal apparatus may obtain an image or a video, determine a target music element, and generate streaming media in response to an operation of a user. The streaming media includes the video or the image and target music, the target music includes the target music element, and the target music is associated with content of the video or the image. In the method described above, the terminal apparatus may generate, based on the image or the video inputted by the user, the music that matches the content of the image or the video, and the terminal apparatus may further generate the streaming media that includes the image or the video and the target music. Therefore, the user does not need to perform complex lyrics creation and composition, reducing complexity of music creation, reducing complexity of streaming media generation, improving efficiency of streaming media generation, improving diversity of interaction, and improving user experience.

The technical solutions of the present disclosure and how the technical solutions of the present disclosure solve the above-mentioned technical problem are described below in detail with specific embodiments. The following several specific embodiments may be combined with each other, and details about same or similar concepts or processes may not be described in some embodiments again. The embodiments of the present disclosure are described below with reference to the accompanying drawings.

Fig. 2 is a schematic flowchart of a streaming media generation method according to an embodiment of the present disclosure. Referring to Fig. 2, the method may include the following steps.

S201: Obtaining an image or a video.

An execution body of the embodiment of the present disclosure may be a terminal apparatus or may be a streaming media generation device provided in the terminal apparatus. The streaming media generation device may be implemented based on software, or the streaming media creation device may be implemented based on a combination of software and hardware. This is not limited in the embodiment of the present disclosure.

The image may be an image used for streaming media generation. For example, a user may create streaming media based on any image, or a user may shoot an image and create streaming media based on the image. This is not limited in the embodiment of the present disclosure.

It should be noted that, in the embodiment of the present disclosure, the terminal apparatus may generate streaming media based on one image or may generate streaming media based on a plurality of images. This is not limited in the embodiment of the present disclosure.

The video may be a video used for streaming media generation. For example, a user may generate streaming media based on any segment of video in the terminal apparatus, or a user may generate streaming media based on a segment of shot video. This is not limited in the embodiment of the present disclosure.

It should be noted that the streaming media generated by the terminal apparatus based on the image or the video may be music, or may be a video including music. This is not limited in the embodiment of the present disclosure.

Optionally, the terminal apparatus may obtain the image in the following feasible implementation manner: displaying a shooting page, and obtaining the image in response to a touch operation on a shooting control in the shooting page.

The shooting page may include the shooting control. For example, when the user taps the shooting control in the shooting page, the terminal apparatus may obtain the image based on a camera device. For example, a streaming media generation page may include a control for displaying the shooting page, and the terminal apparatus may display the shooting page when the user taps the control.

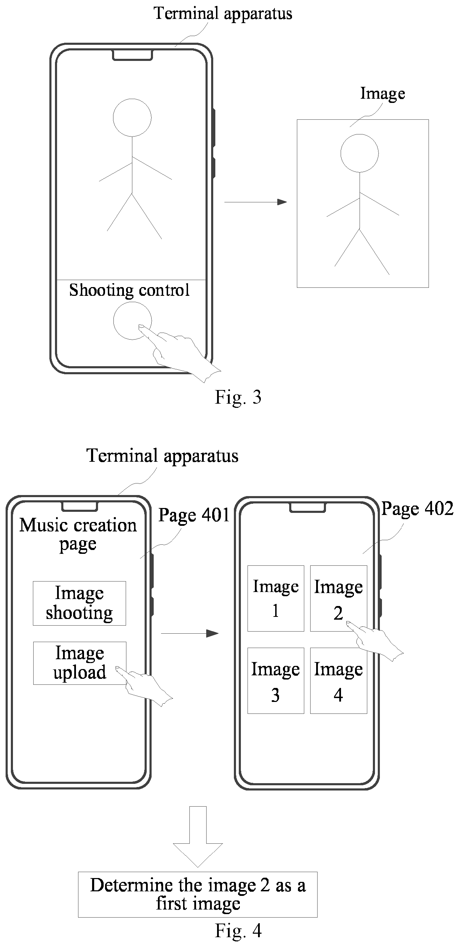

A process in which the terminal apparatus obtains the image is described below with reference to Fig. 3.

Fig. 3 is a schematic diagram of obtaining an image according to an embodiment of the present disclosure. Referring is made to Fig. 3, which includes the terminal apparatus. A display page of the terminal apparatus is the shooting page. The shooting page includes the shooting control and an object to be captured. When the user taps the shooting control in the shooting page, the terminal apparatus may capture the object to be captured to obtain an image. The image may include the object to be captured. In this way, the terminal apparatus can generate streaming media based on the image captured in real time, improving flexibility of streaming media generation.

Optionally, the terminal apparatus may obtain the image in the following feasible implementation manner: displaying an image page, and obtaining the image in response to a touch operation on a candidate image in the image page.

The image page may include at least one candidate image. For example, the candidate image may be an image shot in advance by the terminal apparatus or an image received by the terminal apparatus from another apparatus. This is not limited in the embodiment of the present disclosure. For example, the image page may be an album page. When the user taps an image obtaining control in the streaming media generation page, the terminal apparatus may jump to the image page.

Optionally, the streaming media generation page may include an image upload control. When the user taps the image upload control, the terminal apparatus may display the image page. For example, a video generation page may include an "image upload" control. When the user taps the "image upload" control, the terminal apparatus may jump to an album page.

For example, the image page may include an image 1, an image 2, and an image 3. If the user taps the image 1, the image obtained by the terminal apparatus is the image 1. If the user taps the image 2, the image obtained by the terminal apparatus is the image 2. If the user taps the image 3, the image obtained by the terminal apparatus is the image 3.

A process of obtaining the image is described below with reference to Fig. 4.

Fig. 4 is another schematic diagram of obtaining an image according to an embodiment of the present disclosure. Referring to Fig. 4, which includes the terminal apparatus. Display pages of the terminal apparatus include a page 401 and a page 401. The page 401 is a music creation page. The page 401 may include an image shooting control and an image upload control. When the user taps the image upload control, the display page of the terminal apparatus jumps from the page 401 to the page 402. The page 402 may be an image storage page. The page 402 may include an image 1, an image 2, an image 3, and an image 4. When the user taps the image 2, the terminal apparatus may determine the image 2 as a first image. In this way, the terminal apparatus may create music based on a historically obtained image, improving flexibility of music creation. Because the user may filter the image, quality of the created music can be improved.

Optionally, the terminal apparatus may obtain the image in the following feasible implementation manner: obtaining a video, and extracting a video frame image from the video to obtain the image.

The terminal apparatus may obtain the video in response to a touch operation of the user. For example, the terminal apparatus may display a video page, and the video page may include a candidate video 1 and a candidate video 2. If the user taps the candidate video 1, the video obtained by the terminal apparatus is the candidate video 1. If the user taps the candidate video 1 and the candidate video 2, the video obtained by the terminal apparatus is the candidate video 1 and the candidate video 2. For example, the terminal apparatus may display a shooting page. When the user taps a video recording control in the shooting page, the terminal apparatus may record a segment of video, to obtain the video.

It should be noted that the terminal apparatus may obtain the video in any feasible implementation manner (for example, receive the video sent by another apparatus). This is not limited in the embodiment of the present disclosure.

Optionally, the terminal apparatus may extract any video frame image from the video to obtain the image. For example, the video may include a video frame image 1, a video frame image 2, and a video frame image 3. The terminal apparatus may determine the video frame image 1 as the obtained image, or the terminal apparatus may determine the video frame image 2 as the obtained image. This is not limited in the embodiment of the present disclosure.

Optionally, the terminal apparatus may recognize content of the video, to obtain a key frame in the video, and determine the key frame as the obtained image. For example, the terminal apparatus may recognize an object included in the video. If the object is included in the video frame image 1, the terminal apparatus may determine the video frame image 1 as the key frame, to obtain the obtained image. If the object is included in the video frame image 2, the terminal apparatus may determine the video frame image 2 as the key frame, to obtain the obtained image. In this way, the terminal apparatus can accurately obtain an image with rich content based on the obtained video, so that accuracy of the generated streaming media and an effect of the streaming media can be improved, and user experience can be improved.

It should be noted that the terminal apparatus may determine the key frame in the video in any feasible implementation manner. This is not limited in the embodiment of the present disclosure.

S202: Determining a target music element.

Optionally, the target music element may be a music style. For example, the target music element may be a rap music style, a folk music style, a classical music style, a pop music style, etc. This is not limited in the embodiment of the present disclosure.

Optionally, the music style may be a style of music to be generated. For example, the streaming media may include music. Therefore, if the target music element is the rap music style, the streaming media generated by the terminal apparatus may include music of the rap style, or if the target music element is the pop music style, the streaming media generated by the terminal apparatus may include music of the pop style.

It should be noted that the terminal apparatus may determine the target music element based on an operation of the user (as in the embodiment shown in Fig. 1, the user taps a rap style control, and the terminal apparatus determines that the target music element is the rap music style). The terminal apparatus may obtain the target music element based on any feasible implementation manner(for example, another apparatus may send an identifier of the rap music style to the terminal apparatus, and the terminal apparatus may determine that the target music element is the rap music style). This is not limited in the embodiment of the present disclosure.

S203: Generating streaming media in response to an operation of the user.

Optionally, the streaming media may include the video or the image and the target music. For example, the streaming media may include the video and the target music, or the streaming media may include the image and the target music. This is not limited in the embodiment of the present disclosure.

Optionally, the target music may include the target music element. For example, if the target music element is the rap music style, the target music in the streaming media may be rap music. If the target music element is the pop music style, the target music in the streaming media may be pop music.

Optionally, the target music is associated with the content of the video or the image. For example, if the image includes a kitten, lyrics of the target music may be related to the kitten. If the image is a rainy sky, lyrics of the target music may be the same as the rainy sky. Likewise, lyrics of the target music may be alternatively associated with the content of the video. This is not limited in the embodiment of the present disclosure.

The embodiment of the present disclosure provides the streaming media generation method. The shooting page is displayed, the image is obtained in response to the touch operation on the shooting control in the shooting page, the target music element is determined, and the streaming media is generated in response to the operation of the user. The streaming media may include the video or the image and the target music, the target music may include the target music element, and the target music is associated with the content of the video or the image. As such, the terminal apparatus may generate the streaming media based on the image or the video inputted by the user. The streaming media may include the music associated with the content of the image or the video, and the streaming media may further include the image or the video. In this way, diversity of interaction can be improved, and user experience can be improved. In addition, the terminal apparatus may automatically generate the music or the video including the music based on the image or the video, so that complexity of streaming media generation can be reduced, and efficiency of streaming media generation can be improved.

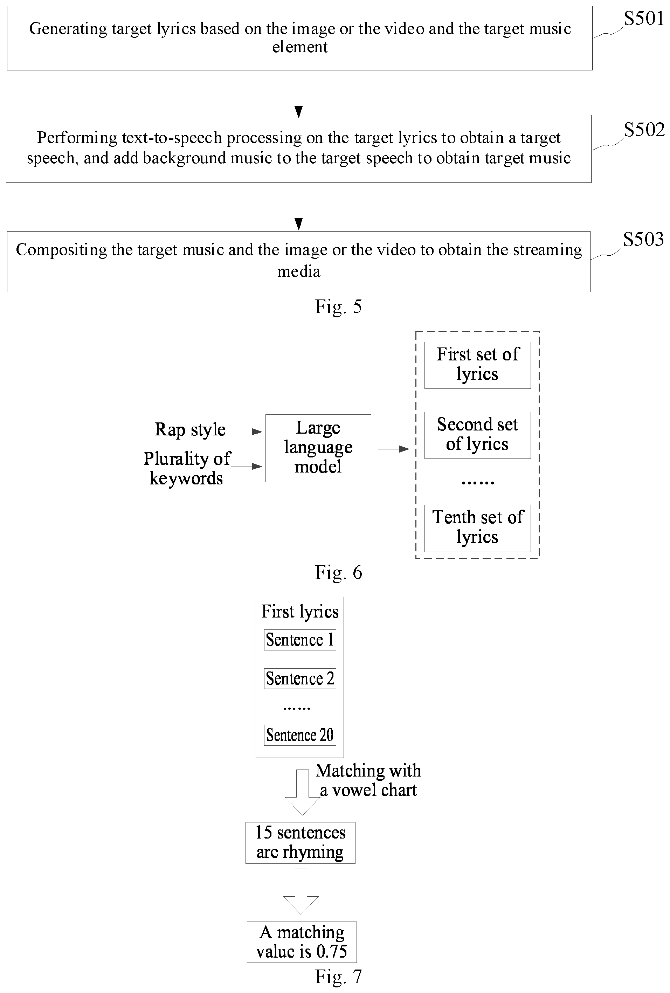

Based on the embodiment shown in Fig. 2, a method for generating streaming media in the streaming media generation method described above is described below with reference to Fig. 5.

Fig. 5 is a schematic diagram of a streaming media generation method according to an embodiment of the present disclosure. Referring to Fig. 5, a procedure of the method includes the following steps.

S501: Generating target lyrics based on the image or the video and the target music element.

The target lyrics may be lyrics that match the target music element. For example, if the target music element is a rap music style, the target lyrics may be lyrics of rap music. If the target music element is a pop music style, the target lyrics may be lyrics of pop music.

A terminal apparatus may generate the target lyrics based on the following feasible implementation manner: recognizing content of the image or the video to obtain a plurality of keywords associated with the content, generating a plurality of sets of first lyrics based on a language model, the target music element, and the plurality of keywords, and determining the target lyrics from the plurality of sets of first lyrics.

Optionally, the keywords may be used to describe the content in the image. For example, the keywords may include an object, a scene, a character, etc. For example, the keywords may be: a kitten is sitting next to a puppy; or the keywords may be: kitten, puppy, butterfly, etc.

Optionally, the terminal apparatus recognizing the content of the image or the video to obtain the plurality of keywords associated with the content may be specifically: convoluting the image or the video to obtain an image feature of the image or a video feature of the video, and determining the plurality of keywords based on the image feature or the video feature. For example, the terminal apparatus may convolute the image based on a pre-trained image recognition model to obtain the image feature associated with the image, and determine the plurality of keywords associated with the content of the image based on the image feature. The image recognition model is a model trained based on a plurality of sets of samples. Each set of samples may include a sample image and at least one keyword corresponding to the sample image.

It should be noted that the terminal apparatus may alternatively determine the plurality of keywords in any other feasible implementation manner(for example, an implementation is based on a DLSapce platform, the DLSapce platform is a one-stop full-link AI development platform, the terminal apparatus may upload the image to the image host to generate an accessible http link, and the terminal apparatus may send the link to the DLSapce platform to obtain the keywords associated with the image). This is not limited in the embodiment of the present disclosure.

The first lyrics may be candidate lyrics. For example, the terminal apparatus may obtain a plurality of sets of candidate first lyrics, and then determine the target lyrics from the plurality of sets of candidate first lyrics. Each set of candidate first lyrics may be associated with the content of the image or the video.

Optionally, the terminal apparatus may input the target music element and the plurality of keywords into the language model, to obtain the plurality of sets of first lyrics. In this way, the terminal apparatus can accurately obtain lyrics that best match the content of the image or the video based on the plurality of sets of first lyrics, improving quality of streaming media.

It should be noted that the language model in the embodiment of the present disclosure may be any type of large language model. This is not limited in the embodiment of the present disclosure.

It should be noted that the terminal apparatus may alternatively obtain the plurality of sets of first lyrics in any other feasible implementation manner. This is not limited in the embodiment of the present disclosure.

A process of obtaining the plurality of sets of first lyrics is described below with reference to Fig. 6.

Fig. 6 is a schematic diagram of a process of obtaining a plurality of sets of first lyrics according to an embodiment of the present disclosure. Referring to Fig. 6, which includes a large language model. The terminal apparatus (not shown in Fig. 6) may input the rap style and the plurality of keywords into the large language model, and the large language model may generate a first set of lyrics, a second set of lyrics, ..., and a tenth set of lyrics based on the rap style and the plurality of keywords. A style of each set of lyrics is the rap style, and each set of lyrics is lyrics of one piece of music.

The terminal apparatus determining the target lyrics from the plurality of sets of first lyrics may be specifically: determining a matching value between each set of first lyrics and the target music element, and determining a set of first lyrics with a highest matching value as the target lyrics. In this way, because the matching value can accurately reflect a degree of matching between the lyrics and the target music element, lyrics quality of the target lyrics determined by the terminal apparatus is high, so that quality of generated streaming media can be improved.

Optionally, the matching value may be used to indicate a matching degree between the first lyrics and the target music element. For example, the target music element may be a rap music style. A higher matching value of the first lyrics indicates a higher similarity between the first lyrics and lyrics of rap music. A lower matching value of the first lyrics indicates a lower similarity between the first lyrics and lyrics of rap music.

Optionally, when the target music element is the rap music style, the terminal apparatus may determine the matching value of each set of first lyrics in the following feasible implementation manner: for any set of first lyrics, determining a number of sentences in the first lyrics and a number of rhymes in the first lyrics, and determining a ratio of the number of rhymes to the number of sentences as a matching degree of the first lyrics.

The number of sentences may be a total number of sentences included in the set of first lyrics. For example, if the set of first lyrics includes 10 sentences, the number of sentences is 10. If the set of first lyrics includes 20 sentences, the number of sentences is 20.

Optionally, the terminal apparatus may determine the number of sentences in the set of first lyrics based on a number of punctuation marks in the first lyrics. For example, the terminal apparatus may determine the number of sentences in the set of first lyrics based on a number of commas and a number of periods in the set of first lyrics. For example, if the set of first lyrics includes 2 commas and 1 period, the terminal apparatus may determine that the number of sentences in the set of first lyrics is 3.

It should be noted that the terminal apparatus may alternatively determine a number of sentences in a set of first lyrics in any other feasible implementation manner. This is not limited in the embodiment of the present disclosure.

The number of rhymes may be a number of sentences in which last words are vowels. For example, if last words of 10 sentences in the set of first lyrics are vowels, the terminal apparatus may determine that the number of rhymes corresponding to the set of first lyrics is 10. If last words of 20 sentences in the set of first lyrics are vowels, the terminal apparatus may determine that the number of rhymes corresponding to the set of first lyrics is 20.

Optionally, the terminal apparatus may detect pinyin of a last word in each sentence based on a preset vowel chart, to obtain the number of rhymes. For example, if the pinyin of the last word in the sentence includes a word in the vowel chart, the terminal apparatus may determine that the sentence is rhyming. If the pinyin of the last word in the sentence does not include a word in the vowel chart, the terminal apparatus may determine that the sentence is not rhyming.

It should be noted that the terminal apparatus may determine a number of rhymes in a set of first lyrics in any feasible implementation manner. This is not limited in the embodiment of the present disclosure.

Optionally, the matching value may be a ratio of a number of rhymes to a number of sentences. In this way, lyrics with good quality can be obtained based on the matching value (for example, the lyrics have a high matching degree with the rap music style, and the lyrics have abundant phrases), so that quality of the streaming media can be improved. For example, if a number of rhymes in first lyrics is 10, and a number of sentences is 20, the terminal apparatus may determine that a matching value corresponding to the set of first lyrics is 0.5. If a number of rhymes in a set of first lyrics is 40, and a number of sentences is 50, the terminal apparatus may determine that a matching value corresponding to the set of first lyrics is 0.8.

It should be noted that before the terminal apparatus determines the matching value of each set of first lyrics, the terminal apparatus may further detect a number of words in each set of first lyrics. If the number of words is less than a first threshold, the terminal apparatus may determine that the matching value of the set of lyrics is 0. If the number of words is greater than a second threshold, the terminal apparatus may determine that the matching value of the set of lyrics is 0.1. The second threshold is greater than the first threshold. For example, the first threshold is 50, and the second threshold is 100. If a number of words in a set of first lyrics is 40, it indicates that the set of lyrics is short, and the terminal apparatus determines that a matching value corresponding to the set of lyrics is 0 (the matching value does not need to be calculated based on a number of rhymes and a number of sentences). If a number of words in a set of first lyrics is 120, it indicates that the set of lyrics is long, and the terminal apparatus determines that a matching value corresponding to the set of lyrics is 0.1 (the matching value does not need to be calculated based on a number of rhymes and a number of sentences). In this way, efficiency of determining the target lyrics can be improved, and efficiency of streaming media generation can be improved.

A process of determining a matching value corresponding to a set of first lyrics is described below with reference to Fig. 7.

Fig. 7 is a schematic diagram of determining a matching value of first lyrics according to an embodiment of the present disclosure. Referring to Fig. 7, which includes the first lyrics. The first lyrics may include a sentence 1, a sentence 2, ..., and a sentence 20. The terminal apparatus (not shown in Fig. 7) may obtain pinyin of a last word in each sentence, match the pinyin of the last word in each sentence with the vowel chart, and learn that 15 sentences are rhyming. The terminal apparatus may determine, based on the number 15 of rhymes and the number 20 of sentences, that the matching value of the first lyrics is 0.75.

Optionally, the terminal apparatus may determine a set of first lyrics with a highest matching value as the target lyrics. For example, if a matching value of first lyrics 1 generated by the terminal apparatus is 0.1, a matching value of first lyrics 2 is 0.6, and a matching value of first lyrics 3 is 0.9, the terminal apparatus may determine first lyrics 3 as the target lyrics.

Optionally, the terminal apparatus may further filter the first lyrics before determining the set of the first lyrics with the highest matching value as the target lyrics. In response to the absence of first lyrics with a matching value greater than or equal to a preset threshold among the plurality of sets of first lyrics, a plurality of sets of second lyrics are obtained based on the language model, an identifier of the rap music style, the plurality of keywords, and a plurality of preset phrases that rhyme; a matching value between each set of second lyrics and the rap music style is determined; and a plurality of sets of second lyrics with matching values greater than or equal to the preset threshold are determined as a plurality of sets of first lyrics.

Optionally, the preset phrases may be phrases that rhyme. For example, because the target music element is the rap music style, the preset phrases may be phrases that rhyme. For example, the preset phrases may include: phrases that rhyme in terms of the vowel ai, such as gen wo yi qi lai, duo zi duo cai, zhen de hen hao mai, kai huai, and se cai.

It should be noted that when the target music element is the rap music style, the preset phrases may alternatively be phrases that rhyme in terms of another vowel. This is not limited in the embodiment of the present disclosure.

Optionally, if there are no first lyrics with a matching value greater than or equal to the preset threshold among the plurality of sets of first lyrics, it indicates that lyrics quality of the plurality of sets of first lyrics is poor, and the terminal apparatus may re-generate new lyrics based on the language model. For example, the language model generates first lyrics 1, first lyrics 2, and first lyrics 3 based on the identifier of the rap music style and the plurality of keywords. A matching value corresponding to the first lyrics 1 is 0, a matching value corresponding to the first lyrics 2 is 0.2, and a matching value corresponding to the first lyrics 3 is 0.3. If the preset threshold is 0.6, the terminal apparatus determines that the current 3 sets of first lyrics have poor quality, and have a low matching degree with the rap music style. The terminal apparatus may re-input the identifier of the rap music style, the plurality of keywords, and the plurality of preset phrases that rhyme into the language model, and the language model may output a plurality of sets of second lyrics (new lyrics). The terminal apparatus may determine lyrics with a matching value greater than or equal to the preset threshold in the second lyrics as new first lyrics. In this way, quality of the target lyrics can be improved, and quality of the generated streaming media can be improved.

It should be noted that a method in which the terminal apparatus determines a matching value corresponding to each set of second lyrics is the same as the method in which the terminal apparatus determines the matching value corresponding to each set of first lyrics. Details are not described again in the embodiment of the present disclosure.

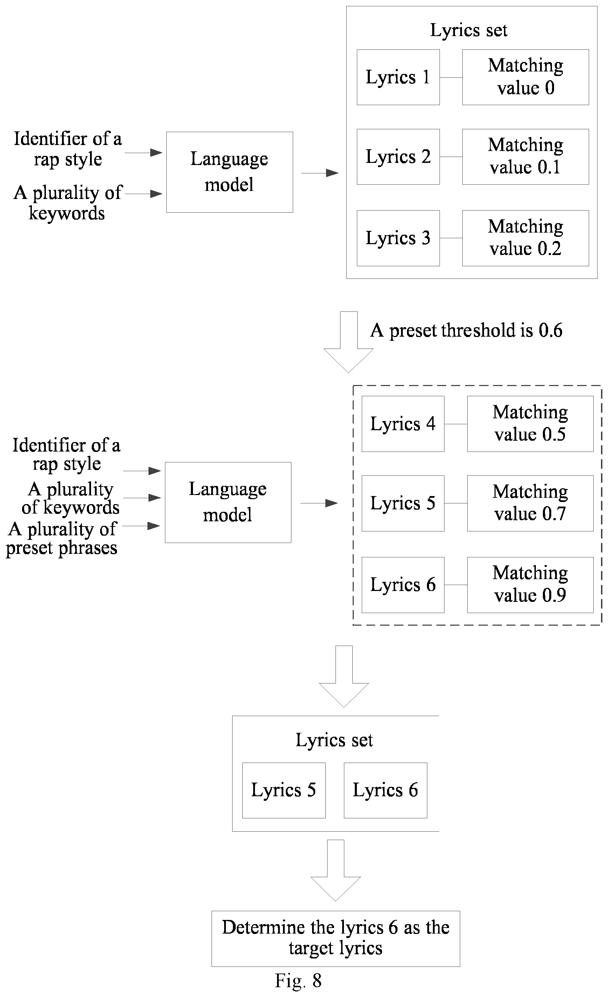

A process of determining the target lyrics is described below with reference to Fig. 8.

Fig. 8 is a schematic diagram of a process of determining target lyrics according to an embodiment of the present disclosure. Referring to Fig. 8, which includes the language model. The terminal apparatus (not shown in Fig. 8) may input the identifier of the rap style and the plurality of keywords into the language model, and the language model may output a lyrics set. The lyrics set includes lyrics 1, lyrics 2, and lyrics 3. The lyrics 1 correspond to a matching value of 0, the lyrics 2 correspond to a matching value of 0.1, and the lyrics 3 correspond to a matching value of 0.2.

Referring to Fig. 8, if the preset threshold is 0.6, the terminal apparatus re-inputs the identifier of the rap style, the plurality of keywords, and the plurality of preset phrases that rhyme into the language model, and the language model may output lyrics 4, lyrics 5, and lyrics 6. The lyrics 4 correspond to a matching value of 0.5, the lyrics 5 correspond to a matching value of 0.7, and the lyrics 6 correspond to a matching value of 0.9. The terminal apparatus determines that the lyrics 5 and the lyrics 6 (whose matching values are both greater than 0.6) are included in the lyrics set. Because the matching value corresponding to the lyrics 6 is the largest, the terminal apparatus may determine the lyrics 6 as the target lyrics.

In this way, the terminal apparatus can determine the target lyrics that best match the rap music style based on the matching value corresponding to each set of lyrics. When quality of the lyrics obtained by the language model based on the plurality of keywords is poor, the terminal apparatus may re-add a plurality of keywords and a plurality of preset phrases that match the rap music style to the language model, thereby ensuring the quality of the target lyrics and improving the quality of the streaming media.

S502: Performing text-to-speech processing on the target lyrics to obtain a target speech, and add background music to the target speech to obtain target music.

The target speech may be a speech that matches the target lyrics. Optionally, the terminal apparatus may obtain the target speech in the following feasible implementation manner: performing text-to-speech processing on the target lyrics based on a text-to-speech (TTS) algorithm, to obtain the target speech that matches the target lyrics.

The TTS technology is a technology that may convert a text into an audible speech for output. For example, the TTS technology can convert text information such as a written text, an electronic document, and webpage content into speech information, so that the user can obtain the information in an auditory manner.

For example, the terminal apparatus may process the target lyrics based on a TTS module, and the TTS module may convert the target lyrics into the target speech. The TTS module generates the target speech that matches a rhyming word, a rhyme, and a rhythm of the target lyrics. For example, if the target lyrics are 4-4 beats, a rhythm of the target speech is also 4-4 beats. If a rhyming manner of the target lyrics is single rhyming, a rhyming manner of the target speech is also single rhyming. If a rhyming word of the target lyrics is ai, and a rhyming manner is double rhyming, the speech ai in the target speech is also double rhyming.

Optionally, after the terminal apparatus obtains the target speech, the target speech may be further processed based on the rap music style. For example, the terminal apparatus may adjust a tone, a speed, and the rhythm of the target speech, so that the target speech matches the rap music style.

It should be noted that the terminal apparatus may convert the target lyrics into the target speech in any feasible implementation manner. This is not limited in the embodiment of the present disclosure.

Optionally, the terminal apparatus may add the background music to the target speech to generate music of a target music style in the following feasible implementation manner: The terminal apparatus may obtain the rhyming manner and the rhythm of the target speech, and obtain, based on the TTS module, the background music that matches the rhyming manner and the rhythm of the target speech. For example, the TTS module may obtain the background music that matches the rhyming manner and the rhythm from a background music library based on the rhyming manner and the rhythm of the target speech. For example, the background music library may include a plurality of sets of correspondence relationships, and the correspondence relationships may be: background music corresponding to 4-4 beats, single rhyming, and a rhyming word ai may be background music 1, background music corresponding to 4-4 beats, double rhyming, and a rhyming word a may be background music 2, etc.

Optionally, the terminal apparatus may composite the target speech and the background music to obtain the target music. For example, if the target music element is the rap music style, the terminal apparatus may generate a target speech that matches the rap music style, and the terminal apparatus may add background music of the rap music style to the speech, to obtain music of the rap style.

S503: Compositing the target music and the image or the video to obtain the streaming media.

Optionally, after the terminal apparatus adds the background music to the target speech to generate the music of the target music style, the terminal apparatus may further composite the target music and the image or the video to obtain the streaming media. For example, the terminal apparatus may composite the target music and the image to obtain a video. A background image of the video may be the image obtained by the terminal apparatus, and background music of the video may be the target music.

Optionally, when the terminal apparatus composites the video, subtitles associated with lyrics of the target music may be further added to the video. Details may be as follows: Audio frame extraction is performed on the music of the target music style, and speech recognition is performed on an extracted audio frame to convert the audio frame into a text. The terminal apparatus may perform segmentation based on a timestamp of the text in the music, and generate subtitles (sticker data) corresponding to the text based on associated text and timestamp information. In this way, during video playing, the subtitles may be displayed based on an indication of the timestamp, to determine that the subtitles are synchronized with a current playing progress. In this way, the video generated by the terminal apparatus can include not only the target music of the rap music style, but also the subtitles of the lyrics of the target music, thereby improving a display effect of the video.

Optionally, the terminal apparatus may perform frame extraction based on a preset time interval, to obtain a key segment in the music. For example, the terminal apparatus may extract one key frame every 30 milliseconds, to obtain a plurality of key frames corresponding to the music.

Optionally, the terminal apparatus performs segmentation based on the timestamp of the text in the music, to obtain a correspondence relationship between the text and the timestamp, and may associate different portions of the music with corresponding texts. This can ensure that the subtitles match the playing progress, and improve the display effect of the video.

The embodiment of the present disclosure provides the streaming media generation method. The terminal apparatus may recognize the content of the image or the video to obtain the plurality of keywords associated with the content, generate the plurality of sets of first lyrics based on the language model, the target music element, and the plurality of keywords, determine the target lyrics from the plurality of sets of first lyrics, perform text-to-speech processing on the target lyrics to obtain the target speech, add the background music to the target speech to obtain the target music, and composite the target music and the image or the video to obtain the streaming media. In this way, the terminal apparatus can generate the streaming media based on the image or the video inputted by the user, reducing complexity of generating the streaming media. In addition, the terminal apparatus may generate a plurality of sets of lyrics associated with the content of the image or the video based on the large language model, and determine the target lyrics that best match the rap music style from the plurality of sets of lyrics, improving quality and accuracy of the target lyrics, and improving quality and accuracy of the streaming media.

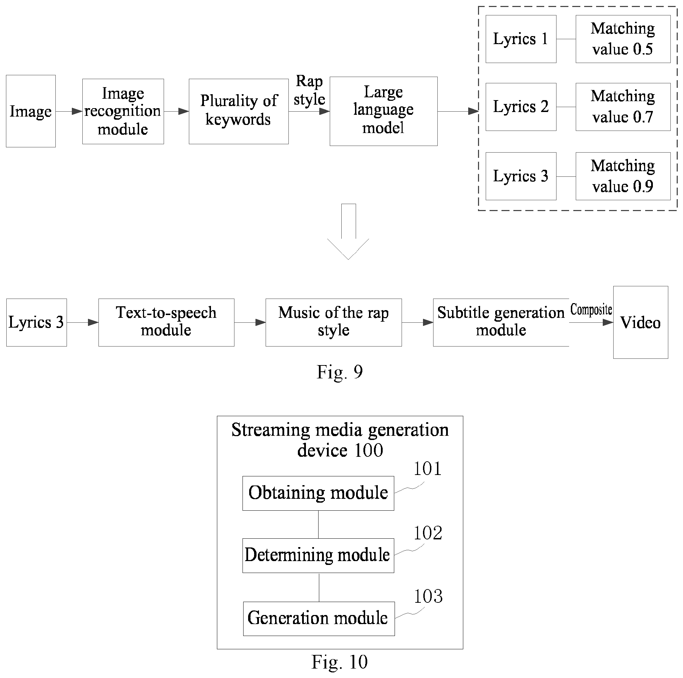

Based on any one of the above-mentioned embodiments, a process of the above-mentioned streaming media generation method is described below with reference to Fig. 9.

Fig. 9 is a schematic diagram of a process of a streaming media generation method according to an embodiment of the present disclosure. Referring to Fig. 9, which includes an image, an image recognition module, a large language model, a text-to-speech module, and a subtitle generation module. A terminal apparatus (not shown in Fig. 9) may input a first image into the image recognition module, and the image recognition module may output a plurality of keywords describing image content of the first image. The terminal apparatus may input the plurality of keywords and an identifier of the rap style into the large language model.

Referring to Fig. 9, the large language model may output lyrics 1, lyrics 2, and lyrics 3, and the terminal apparatus may determine that a matching value corresponding to the lyrics 1 is 0.5, a matching value corresponding to the lyrics 2 is 0.7, and a matching value corresponding to the lyrics 3 is 0.9. Because the matching value corresponding to the lyrics 3 is the largest, the terminal apparatus may determine the lyrics 3 as target lyrics.

Referring to Fig. 9, the terminal apparatus may input the lyrics 3 into the text-to-speech module, and the text-to-speech module may convert the lyrics 3 into a speech, to obtain music of the rap style. The terminal apparatus may input the music of the rap style into the subtitle generation module. The subtitle generation module may determine text subtitles corresponding to each audio frame, and composite the first image, the music of the rap style, and the subtitles into a video. Audio content of the video is the music of the rap style, and the video may include the image and the subtitles.

In this way, the terminal apparatus can generate the music associated with the image content based on the image, and the user does not need to create lyrics and compose, so that efficiency of music creation is improved. In addition, because the terminal apparatus can generate the lyrics that match the rap music style based on the large language model, complexity of music creation can be reduced, and user experience can be improved.

Fig. 10 is a schematic structural diagram of a streaming media generation device according to an embodiment of the present disclosure. Referring to Fig. 10, the streaming media generation device 100 includes an obtaining module 101, a determining module 102, and a generation module 103.

The obtaining module 101 is configured to obtain an image or a video.

The determining module 102 is configured to determine a target music element.

The generation module 103 is configured to generate streaming media in response to an operation of a user, and the streaming media includes the video or the image and target music, the target music includes the target music element, and the target music is associated with content of the video or the image.

According to one or more embodiments of the present disclosure, the obtaining module 101 is specifically configured to:
display a shooting page; and
obtain the image in response to a touch operation on a shooting control in the shooting page.

According to one or more embodiments of the present disclosure, the obtaining module 101 is specifically configured to:
display an image page; and
obtain the image in response to a touch operation on a candidate image in the image page.

According to one or more embodiments of the present disclosure, the obtaining module 101 is specifically configured to:
obtain the video; and
extract a video frame image from the video to obtain the image.

According to one or more embodiments of the present disclosure, the target music element is a music style.

According to one or more embodiments of the present disclosure, the generation module 103 is specifically configured to:
generate target lyrics based on the image or the video and the target music element;
perform text-to-speech processing on the target lyrics to obtain a target speech, and add background music to the target speech to obtain the target music; and
composite the target music and the image or the video to obtain the streaming media.

According to one or more embodiments of the present disclosure, the generation module 103 is specifically configured to:
recognize the content of the image or the video to obtain a plurality of keywords associated with the content;
generate a plurality of sets of first lyrics based on a language model, the target music element, and the plurality of keywords; and
determine the target lyrics from the plurality of sets of first lyrics.

According to one or more embodiments of the present disclosure, the generation module 103 is specifically configured to:
determine a matching value between each set of first lyrics and the target music element; and
determine a set of first lyrics with a highest matching value as the target lyrics.

According to one or more embodiments of the present disclosure, the generation module 103 is specifically configured to:
determine, for any set of first lyrics, a number of sentences in the first lyrics and a number of rhymes in the first lyrics; and
determine a ratio of the number of rhymes to the number of sentences as a matching value of the first lyrics.

According to one or more embodiments of the present disclosure, the generation module 103 is further configured to:
in response to the absence of first lyrics with a matching value greater than or equal to a preset threshold among the plurality of sets of first lyrics, obtain a plurality of sets of second lyrics based on the language model, an identifier of the rap music style, the plurality of keywords, and a plurality of preset phrases that rhyme; and
determine a matching value between each set of second lyrics and the rap music style, and determine a plurality of sets of second lyrics with matching values greater than or equal to the preset threshold as a plurality of sets of first lyrics.

The streaming media generation device provided in the embodiment may be configured to perform the technical solution of the above-mentioned method embodiment. The implementation principle and technical effects thereof are similar, and are not described herein again in the embodiment.

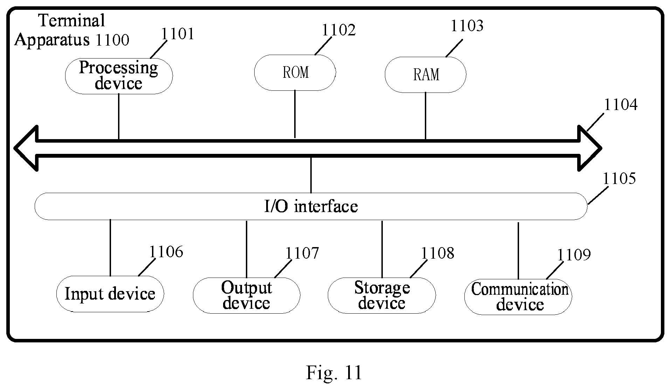

Fig. 11 is a schematic structural diagram of a terminal apparatus according to an embodiment of the present disclosure. Referring to Fig. 11, which is a schematic structural diagram of a terminal apparatus 1100 suitable for implementing an embodiment of the present disclosure. The terminal apparatus may include, but is not limited to, a mobile terminal such as a mobile phone, a notebook computer, a digital broadcast receiver, a personal digital assistant (PDA), a tablet computer (portable Android device, PAD), a portable media player (PMP), and a vehicle-mounted terminal (such as a vehicle navigation terminal), and a fixed terminal such as a digital TV and a desktop computer. The terminal apparatus shown in Fig. 11 is merely an example, and shall not impose any limitation on the function and scope of use of the embodiments of the present disclosure.

As shown in Fig. 11, the terminal apparatus 1100 may include a processing device (for example, a central processing unit or a graphics processing unit) 1101 that may perform a variety of appropriate actions and processing based on a program stored in a read-only memory (ROM) 1102 or a program loaded from a storage device 1108 into a random access memory (RAM) 1103. The RAM 1103 further stores various programs and data required for the operation of the terminal apparatus 1100. The processing device 1101, the ROM 1102, and the RAM 1103 are connected to one another through a bus 1104. An input/output (I/O) interface 1105 is also connected to the bus 1104.

Generally, the following devices may be connected to the I/O interface 1105: an input device 1106 including, for example, a touchscreen, a touchpad, a keyboard, a mouse, a camera, a microphone, an accelerometer, and a gyroscope; an output device 1107 including, for example, a liquid crystal display (LCD), a speaker, and a vibrator; the storage device 1108 including, for example, a magnetic tape and a hard disk drive; and a communication device 1109. The communication device 1109 may allow the terminal apparatus 1100 to perform wireless or wired communication with other apparatuses to exchange data. Although Fig. 11 shows the terminal apparatus 1100 having various devices, it should be understood that it is not required to implement or have all of the shown devices. It may be an alternative to implement or have more or fewer devices.

In particular, according to the embodiments of the present disclosure, the process described above with reference to the flowchart may be implemented as a computer software program. For example, an embodiment of the present disclosure includes a computer program product, which includes a computer program carried on a computer-readable medium, where the computer program includes program code for performing the method shown in the flowchart. In such an embodiment, the computer program may be downloaded and installed from a network through the communication device 1109, installed from the storage device 1108, or installed from the ROM 1102. When the computer program is executed by the processing device 1101, the above-mentioned functions defined in the method of the embodiments of the present disclosure are performed.

It should be noted that the above-mentioned computer-readable medium described in the present disclosure may be a computer-readable signal medium, a computer-readable storage medium, or any combination thereof. The computer-readable storage medium may be, for example but not limited to, electric, magnetic, optical, electromagnetic, infrared, or semiconductor systems, devices, or members, or any combination thereof. More specific examples of the computer-readable storage medium may include, but are not limited to: an electrical connection having one or more wires, a portable computer magnetic disk, a hard disk drive, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, device, or member. In the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, device, or member. The program code contained in the computer-readable medium may be transmitted by any suitable medium, including but not limited to: electric wires, optical cables, radio frequency (RF), and the like, or any suitable combination thereof.

The above-mentioned computer-readable medium may be included in the above-mentioned terminal apparatus. Alternatively, the computer-readable medium may exist independently, without being assembled into the terminal apparatus.

The above-mentioned computer-readable medium carries one or more programs that, when executed by the terminal apparatus, cause the terminal apparatus to perform the method shown in the above-mentioned embodiment.

An embodiment of the present disclosure provides a computer-readable storage medium storing computer-executable instructions that, when executed by a processor, cause the method according to various possible designs of the above-mentioned embodiments to be implemented.

An embodiment of the present disclosure provides a computer program product including a computer program that, when executed by a processor, causes the method according to various possible designs of the above-mentioned embodiments to be implemented.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Internet service provider).

The flowchart and block diagram in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. Names of the units do not constitute a limitation on the units themselves in some cases, for example, a first obtaining unit may alternatively be described as "a unit for obtaining at least two internet protocol addresses".

The functions described herein above may be performed at least partially by one or more hardware logic components. For example, without limitation, example types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the present disclosure, a machine-readable medium may be a tangible medium that may contain or store a program used by or in combination with an instruction execution system, device or apparatus. The machine-readable medium may be a machine-readable signal medium or a machine-readable storage medium. The machine-readable medium may include, but is not limited to, an electronic, magnetic, optical, electromagnetic, infrared, or semiconductor system, device or apparatus, or any suitable combination thereof. More specific examples of the machine-readable storage medium may include an electrical connection based on one or more wires, a portable computer disk, a hard disk drive, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of devices in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as a terminal apparatus, an application, a server, or a storage medium, that performs operations in the technical solutions of the present disclosure. In an alternative but non-limiting implementation, in response to the reception of the active request from the user, the prompt information may be sent to the user in the form of, for example, a pop-up window, in which the prompt information may be presented in text. Furthermore, the pop-up window may also carry a selection control for the user to choose whether to "agree" or "disagree" to provide the personal information to the terminal apparatus.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

It can be understood that the data involved in the technical solutions (including, but not limited to, the data itself and the access to or use of the data) shall comply with the requirements of corresponding laws, regulations, and relevant provisions. The data may include information, parameters, messages, etc., such as traffic split indication information.

The above-mentioned descriptions are merely preferred embodiments of the present disclosure and explanations of the applied technical principles. Those skilled in the art should understand that the scope of disclosure involved in the present disclosure is not limited to the technical solutions formed by specific combinations of the above-mentioned technical features, and shall also cover other technical solutions formed by any combination of the above-mentioned technical features or equivalent features thereof without departing from the above-mentioned disclosed concept. For example, a technical solution formed by a replacement of the above-mentioned features with technical features with similar functions disclosed in the present disclosure (but not limited thereto) also falls within the scope of the present disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the above-mentioned discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

Although the subject matter has been described in a language specific to structural features and/or logical actions of the method, it should be understood that the subject matter defined in the appended claims is not necessarily limited to the specific features or actions described above. In contrast, the specific features and actions described above are merely example forms of implementing the claims.

## Claims

1. A streaming media generation method, comprising:
obtaining an image or a video;
determining a target music element; and
generating streaming media in response to an operation of a user, wherein the streaming media comprises the video or the image and a target music, the target music comprises the target music element, and the target music is associated with content of the video or the image.

2. The method according to claim 1, wherein obtaining the image comprises:
displaying a shooting page; and
obtaining the image in response to a touch operation on a shooting control in the shooting page.

3. The method according to claim 1 or 2, wherein obtaining the image comprises:
displaying an image page; and
obtaining the image in response to a touch operation on a candidate image in the image page.

4. The method according to any one of claims 1 to 3, wherein obtaining the image comprises:
obtaining the video; and
extracting a video frame image from the video, to obtain the image.

5. The method according to any one of claims 1 to 4, wherein the target music element is a music style.

6. The method according to any one of claims 1 to 5, wherein generating the streaming media comprises:
generating a target lyrics based on the image or the video and the target music element;
performing text-to-speech processing on the target lyrics, to obtain a target speech, and adding background music to the target speech, to obtain the target music; and
compositing the target music and the image or the video, to obtain the streaming media.

7. The method according to claim 6, wherein generating the target lyrics based on the image or the video and the target music element comprises:
recognizing the content of the image or the video, to obtain a plurality of keywords associated with the content;
generating a plurality of sets of first lyrics based on a language model, the target music element, and the plurality of keywords; and
determining the target lyrics from the plurality of sets of first lyrics.

8. The method according to claim 7, wherein determining the target lyrics from the plurality of sets of first lyrics comprises:
determining a matching value between each set of the plurality of sets of first lyrics and the target music element; and
determining one set of first lyrics with a highest matching value as the target lyrics.

9. The method according to claim 8, wherein the target music element is a rap music style; and determining the matching value between each set of the plurality of sets of first lyrics and the target music element comprises:
for any set of first lyrics, determining a number of sentences in the first lyrics and a number of rhymes in the first lyrics; and
determining a ratio of the number of rhymes to the number of sentences as a matching value of the first lyrics.

10. The method according to claim 9, wherein before determining one set of first lyrics with the highest matching value as the target lyrics, the method further comprises:
in response to absence of first lyrics with a matching value greater than or equal to a preset threshold among the plurality of sets of first lyrics, obtaining a plurality of sets of second lyrics based on the language model, an identifier of the rap music style, the plurality of keywords, and a plurality of preset phrases that rhyme; and
determining a matching value between each set of the plurality of sets of second lyrics and the rap music style, and determining a plurality of sets of second lyrics with matching values greater than or equal to the preset threshold as a plurality of sets of first lyrics.

11. A streaming media generation device, comprising an obtaining module, a determining module, and a generation module, wherein
the obtaining module is configured to obtain an image or a video;
the determining module is configured to determine a target music element; and
the generation module is configured to generate streaming media in response to an operation of a user, wherein the streaming media comprises the video or the image and a target music, the target music comprises the target music element, and the target music is associated with content of the video or the image.

12. A terminal apparatus, comprising: a processor and a memory, wherein
the memory is configured to store computer-executable instructions; and
the processor is configured to execute the computer-executable instructions stored in the memory, to cause the processor to perform the streaming media generation method according to any one of claims 1 to 10.

13. A computer-readable storage medium, wherein the computer-readable storage medium has computer-executable instructions stored therein that, when executed by a processor, cause the streaming media generation method according to any one of claims 1 to 10 to be implemented.
